# EUROPÄISCHE PATENTSCHRIFT

(11) **EP 3 924 663 B1**
(45) Veröffentlichungstag und Bekanntmachung des Hinweises auf die Patenterteilung: **17.07.2024**
(21) Anmeldenummer: 20704490.0
(22) Anmeldetag: 05.02.2020
(51) Int. Cl.: F17C 13/00

(54) **SCHUTZVORRICHTUNG FÜR DRUCKGASBEHÄLTER**
PROTECTIVE DEVICE FOR PRESSURIZED GAS CONTAINERS
DISPOSITIF DE PROTECTION POUR DES RÉCIPIENTS DE GAZ SOUS PRESSION

(30) Priorität: 15.02.2019 DE 102019001148
(43) Veröffentlichungstag der Anmeldung: 22.12.2021
(73) Patentinhaber: Messer GasPack GmbH, 47803 Krefeld (DE)
(72) Erfinder: KRIESE, Alexander, 2500 Baden bei Wien (AT)
(74) Vertreter: Münzel, Joachim R.
(86) Internationale Anmeldenummer: PCT/EP2020/052908
(87) Internationale Veröffentlichungsnummer: WO 2020/165006

(56) Entgegenhaltungen:
- WO-A1-2015/132506
- FR-A1- 3 056 281
- US-A1- 2014 332 544

## Beschreibung

Die Erfindung betrifft eine Schutzvorrichtung für Druckgasbehälter, mit einem Gehäuse, das mit einem Druckgasbehälter verbindbar ist und einen Hohlraum zum Umschließen eines wenigstens einen Entnahmeanschluss zum Anschließen einer Verbrauchseinrichtung aufweisenden Entnahmeventils umfasst und eine oder mehrere den Zugang zu dem wenigstens einen Entnahmeanschluss ermöglichende Zugangsöffnung/en aufweist.

Als Druckgasbehälter sollen im Folgenden Behälter zum Speichern und Transportieren von unter Druck stehenden Gasen verstanden werden, insbesondere Behälter mit einem Füllvolumen zwischen 1I und 200I, insbesondere metallische Druckgasflaschen, Gaskartuschen, Druckdosen oder kryogene Speicherbehälter, in denen ein verflüssigtes Gas unter Druck gespeichert wird. Derartige Druckgasbehälter weisen ein Speichervolumen sowie eine Entnahmeöffnung auf, an der ein Entnahmeventil zur kontrollierten Gasentnahme und zur Befüllung des Druckgasbehälters angeordnet ist. Unter dem Begriff "Entnahmeventil" wird hier das Entnahmeventil einschließlich aller darin gegebenenfalls integrierter Armaturen, wie beispielsweise Druckminderer, Dosier- und Nadelventile, Füllanschluss, Entnahmeanschlüsse o.ä. verstanden. Um das Entnahmeventil vor Beschädigungen bei Stürzen o.ä. zu schützen, kommen Ventilschutzvorrichtungen in Form von Schutzhauben, -bügel oder -kappen zum Einsatz, die beispielsweise an einem vorhandenen Gewinde am Halsring einer Druckgasflasche oder an einem entsprechenden Befestigungsabschnitt des Entnahmeventils befestigt werden. Diese Schutzvorrichtungen besitzen eine hohe Steifigkeit, sodass bei einer äußeren Krafteinwirkung gegen die Schutzvorrichtung, beispielsweise beim Umstürzen des Behälters, die zu absorbierende Energie zum Körper des Druckgasbehälters abgeleitet und so das Entnahmeventil vor Beschädigungen geschützt wird. Derartige Schutzvorrichtungen, die aus Metall und/oder Kunststoff gefertigt werden, werden beispielsweise in den Druckschriften DE 44 40 298 A1, US 3 776 412 A, WO 91/04197 A1, WO 98/23895 A1, EP 0 725 247 B1, EP 0 629 812 A1, EP 0 939 875 A1, FR 3 056 281 A1 oder der US 4 332 331 A1 beschrieben.

An die Verpackungsmittel für Druckgase werden zunehmend höhere Anforderungen bezüglich der Hygiene gestellt. Dies betrifft insbesondere Druckgasbehälter, die zur Bevorratung medizinischer Gase oder von Gasen für die Lebensmittelindustrie bestimmt sind. Hintergrund der Anforderungen sind Überlegungen, dass im Verlauf der Transportkette und während der Abfüllung Verunreinigungen an nicht geschützte Anschlüsse gelangen können, die bei der späteren Verwendung mit dem entnommenen Gas in Kontakt treten und dieses verunreinigen können.

Eine Verunreinigung von Entnahmeanschlüssen kann zudem beim Nutzer des Gases erfolgen, wenn beispielsweise ein Druckgasbehälter in einem Krankenhaus oder in einem lebensmittelverarbeitenden Betrieb in Bereichen genutzt wird, in denen sich potenzielle Verunreinigungen, wie beispielsweise Keime aus der Umgebungsluft oder potenziell kontaminierte Flüssigkeiten, wie z.B. Blut, befinden. In diesem Fall können zumindest dann, wenn keine Verbrauchseinrichtung angeschlossen ist, Verunreinigungen auf die Oberflächen des nach außen offen liegenden Entnahmeanschlusses gelangen und somit bei einer nachfolgenden Benutzung zu einer Verunreinigung oder Kontamination des Gases führen. Derartigen Verunreinigungen kann derzeit nur mit einer gründlichen manuellen Reinigung des Entnahmeventils vor der jeweiligen Benutzung begegnet werden, deren Durchführung mit der gebotenen Sorgfalt sehr zeitaufwändig ist.

Um Entnahmeanschlüsse gegen Verunreinigungen oder Beschädigungen zu schützen, werden sie gelegentlich mit einer Schutzkappe aus Metall oder Kunststoff ausgerüstet, die auch als Originalitätskennzeichnung ausgebildet sein kann. Eine speziell für die Entnahmeanschlüsse von Druckgasflaschen konzipierte Schutzkappe wird beispielsweise in der EP 3 114 076 A1 beschrieben. Die Schutzkappe wird jedoch in vielen Fällen nach einer Benutzung nicht wieder am Entnahmeanschluss befestigt, oder sie ist aufgrund ihrer Bauweise nach dem Verlust der Originalität nicht mehr auf den Entnahmeanschluss aufsetzbar.

Aufgabe der vorliegenden Erfindung ist es, eine Schutzvorrichtung für Druckgasbehälter zu schaffen, die die Gefahr einer Verunreinigung des Entnahmeanschlusses zuverlässig reduziert und die zugleich eine einfache Handhabung des Entnahmeanschlusses erlaubt.

Gelöst ist diese Aufgabe bei einer Schutzvorrichtung für Druckgasbehälter der eingangs genannten Art und Zweckbestimmung dadurch, dass das Gehäuse im Bereich der Zugangsöffnung des wenigstens einen Entnahmeanschlusses mit einem elastischen Sicherheitselement ausgerüstet ist, das derart am Gehäuse befestigt ist, dass es aus einer Schließposition, in der der wenigstens eine Entnahmeanschluss vollständig vom Sicherheitselement überdeckt und/oder von diesem umschlossen ist, in eine Freigabeposition aufklappbar ist, in der der wenigstens eine Entnahmeanschluss zum Anschließen einer Verbrauchseinrichtung freigegeben ist und das nach Entfernung der Verbrauchseinrichtung vom Entnahmeanschluss selbsttätig in seine Schließposition zurückkehrt.

Erfindungsgemäß ist ein Druckgasbehälter mit einem Entnahmeventil und einer das Entnahmeventil vor mechanischen Einwirkungen abschirmenden Schutzvorrichtung ausgerüstet. Das Entnahmeventil umfasst bevorzugt neben einem oder mehreren Entnahmeanschlüssen weitere Armaturen, wie beispielsweise ein Druckminderer oder eine Druckanzeige, sowie Einrichtungen zur Betätigung des Ventils, wie beispielsweise ein Handrad. Insbesondere kann es sich beim Entnahmeventil um ein VIPR ("Valve with Integrated Pressure Regulator") handeln. Bevorzugt ist das Entnahmeventil in das Gehäuse der Schutzvorrichtung integriert und die Zugangsöffnungen des Gehäuses den Armaturen des Entnahmeventils angepasst.

Das Gehäuse ist beispielsweise aus zwei miteinander verschraubten Halbschalen aufgebaut, die insgesamt ein bis auf die Zugangsöffnungen sowie einem Befestigungsabschnitt geschlossenes Gehäuse bilden. Der Befestigungsabschnitt dient zum Verbinden des Gehäuses mit dem Druckgasbehälter und umfasst beispielsweise ein Innengewinde zum Aufschrauben auf ein übliches Halsgewinde einer Druckgasflasche. Die Zugangsöffnungen sind bevorzugt so ausgebildet, dass die Armaturen des Entnahmeventils im montierten Zustand von den jeweiligen Zugangsöffnungen passgenau eingefasst werden, wodurch das Eindringen von Verunreinigungen in den Innenraum des Gehäuses unterbunden wird.

Erfindungsgemäß ist das Entnahmeventil zumindest bei Nichtgebrauch, also dann, wenn keine Verbrauchseinrichtung, wie beispielsweise der Gasanschluss eines Verbrauchers oder eine Gasleitung, am Entnahmeanschluss angeschlossen ist, durch das Sicherheitselement geschützt. Das am Gehäuse befestigte Sicherheitselement liegt in dieser Schließposition auf dem Entnahmeanschluss auf oder umschließt diesen, ohne jedoch fest mit ihm verbunden zu sein. Vor dem Anschließen einer Verbrauchseinrichtung wird das Sicherheitselement in seine Freigabeposition verklappt. Die weiterhin bestehende Befestigung des Sicherheitselements am Gehäuse verhindert dabei, dass das Sicherheitselement beim Anschließen der Verbrauchseinrichtung aufgrund einer Unachtsamkeit des Benutzers verlorengeht.

Das Sicherheitselement kann erfindungsgemäß im Übrigen auch mehrere Entnahmeanschlüsse gleichzeitig absichern, d.h. im Schließzustand überdecken; bei räumlich voneinander beabstandeten Entnahmeanschlüssen kann das Sicherheitselement dabei auch zwischen den Entnahmeanschlüssen am Gehäuse befestigt und zu beiden Entnahmeanschlüssen hin aufklappbar sein. Ist der Schutzabschnitt mit mehreren Zugangsöffnungen ausgerüstet, die jeweils den Zugang zu einem oder mehreren Entnahmeanschlüssen des Entnahmeventils ermöglichen, so können jedoch auch einzelne oder alle Zugangsöffnungen mit jeweils einem eigenen Sicherheitselement ausgerüstet werden.

Vor dem Anschließen einer Verbrauchseinrichtung wird das Sicherheitselement aufgeklappt und anschließend die Verbrauchseinrichtung am Entnahmeanschluss befestigt. Die mit dem Entnahmeanschluss verbundene Verbrauchseinrichtung hält das Sicherheitselement anschließend in seiner Freigabeposition. Nach Entfernen der Verbrauchseinrichtung nimmt das Sicherheitselement selbsttätig seine vorherige Form und Position ein und überdeckt oder umschießt den Entnahmeanschluss erneut.

Dazu ist das Sicherheitselement bevorzugt aus einem elastisch verformbaren Material, wie Elastomer, gefertigt. Elastomere sind weitmaschige Polymernetzwerke, die sich bereits bei geringer Kraftwirkung biegen lassen und bei Nachlassen der Krafteinwirkung wieder ihre ursprüngliche Form einnehmen. Das Aufklappen des Sicherheitselements wird in diesem Fall also durch entsprechendes Umbiegen des Elastomermaterials bewirkt.

In einer alternativen Ausgestaltung kann das Sicherheitselement einen zweiteiligen Aufbau haben und neben einem bevorzugt an einem Scharnier befestigten Sicherheitsabschnitt, der auch aus einem unflexiblen Material gefertigt sein kann, einen selbsttätig wirkenden Rückstellmechanismus aufweist, bei dem es sich beispielsweise um eine Rückstellfeder handelt. Der Sicherheitsabschnitt überdeckt oder umfasst in seiner Schließposition den Entnahmeanschluss und wird gegen die Wirkung der Rückstellfeder in seine Freigabeposition verklappt. Nach Beendigung der den Sicherheitsabschnitt in seine Freigabeposition bringenden oder haltenden Krafteinwirkung führt die Rückstellfeder diesen selbsttätig in seine Schließposition zurück.

Um die Handhabung des Sicherheitselements zu erleichtern sieht eine vorteilhafte Ausgestaltung der Erfindung vor, dass das Sicherheitselement einen definierten Knickbereich aufweist. Der Begriff "Knickbereich" ist hier allgemein zu verstehen, er umfasst beispielsweise eine Schwächezone im Material, ein Abschnitt geringerer Stärke oder ein Festkörpergelenk und ist so ausgebildet, dass das Sicherheitselement bei einer geeigneten Krafteinwirkung in genau diesem Bereich aufklappt und so die Freigabe des Entnahmeanschlusses ermöglicht. Insbesondere im Falle eines durch ein elastisches Material realisierten Sicherheitselements ist der Knickbereich so ausgebildet, das nach Beendigung der Krafteinwirkung eine selbsttätige Rückkehr des Sicherheitselements in seine Schließposition erfolgt.

Eine zusätzliche Verbesserung bei der Handhabung wird dadurch erzielt, dass das Sicherheitselement mit einem Griffelement ausgerüstet ist. Dabei handelt es sich beispielsweise um einen angeformten Handgriff oder um eine Griff- oder Fingermulde, durch die einem Benutzer die zur Verbringung des Sicherheitselements in die Freigabeposition erforderliche Richtung der Krafteinwirkung vorgegeben wird.

Eine gleichfalls vorteilhafte Ausgestaltung der Erfindung sieht vor, dass das Sicherheitselement aus einem transparenten Material gefertigt ist. Insbesondere handelt es sich dabei um einen transparenten Elastomer.

Um eine gute Abschottung des Entnahmeanschlusses gegenüber der Umgebung zu erreichen und um das Sicherheitselement selbst zu schützen, weist das Gehäuse im Bereich der Zugangsöffnung für den Entnahmeanschluss oder die Entnahmeanschlüsse bevorzugt eine Vertiefung oder Einbuchtung auf, deren Fläche und Tiefe der Fläche und Dicke des Sicherheitselements angepasst ist und in der das Sicherheitselement in seiner Schließposition aufgenommen ist.

Bevorzugt handelt es sich bei den Druckgasbehältern, bei denen die erfindungsgemäße Schutzvorrichtung zum Einsatz kommt, um Gebinde mit einem Füllvolumen zwischen 1I und 200I, bevorzugt zwischen 1I und 50I. Insbesondere handelt es sich dabei um Druckgasflaschen, in denen bevorzugt Gase oder Gasgemische (im Folgenden unter "Gase" subsumiert) bei einem Druck von bevorzugt zwischen 50 bar und 500 bar, beispielsweise 150 bar, 200 bar oder 300 bar bevorratet werden, oder um kryogene Speicherbehälter, in denen Gase bevorzugt zwischen 1 und 20 bar in tiefkalt verflüssigter Form bevorratet werden. Bei den Gasen oder Gasgemischen handelt es sich insbesondere um technische Gase, medizinische Gase, Gase für Lebensmittelanwendungen oder hochreine Gase, insbesondere Gase, die Sauerstoff, Stickstoff, Kohlendioxid oder Edelgase enthalten und/oder Gasgemische einer genau spezifizierten Zusammensetzung.

Anhand der Zeichnung soll ein Ausführungsbeispiel der Erfindung näher erläutert werden. In schematischen Anzeigen zeigen:
- Fig. 1:: eine mit einer erfindungsgemäßen Schutzvorrichtung ausgerüstete Druckgasflasche in einer Schnittansicht,
- Fig. 2:: die Druckgasflasche aus Fig. 1 in einer Draufsicht gemäß Blickrichtung "II" in Fig. 1.
- Fig 3:: eine Druckgasflasche mit einer erfindungsgemäßen Schutzvorrichtung in einer anderen Ausführungsform

Bei der in den Zeichnungen gezeigten Druckgasflasche 1 handelt es sich um einen Behälter mit einem Füllvolumen von beispielsweise zwischen 1 I und 50 I, der zum Bevorraten eines unter Druck stehenden Gases bei einem Fülldruck von beispielsweise zwischen 50 bar und 300 bar ausgelegt ist. Insbesondere handelt es sich dabei um einen Behälter zum Bevorraten von Stickstoff, Sauerstoff, Kohlendioxid, einem Edelgas oder einem Gasgemisch. Insbesondere handelt es sich dabei um eine Druckgasflasche zum Speichern eines medizinischen oder für Lebensmittelanwendungen bestimmten Gases oder Gasgemisches.

Die Druckgasflasche 1 umfasst in üblicher und hier nicht näher erläuterten Weise einen beispielsweise aus Metall gefertigten Flaschenkorpus 2 mit einem Schulterabschnitt 4 und einem Halsringgewinde 5, das um eine hier nicht gezeigte Ausgangsöffnung herum angeordnet ist.

Die Druckgasflasche 1 ist des Weiteren mit einem Flaschenkopf 7 ausgerüstet. Dieser umfasst ein an der Ausgangsöffnung der Druckgasflasche 1 befestigtes Entnahmeventil 8, bei dem es sich insbesondere um ein Standard-Flaschenventil handelt, wie es häufig bei handelsüblichen Druckgasflaschen zum Einsatz kommt und das allen gesetzlichen Sicherheitsanforderungen entspricht. Das Entnahmeventil 8 weist in an sich bekannter Weise eine Ventilspindel 9 auf, durch deren Drehung ein Gasausgang 10 des Entnahmeventils 8 geöffnet bzw. geschlossen wird.

Darüber hinaus weist der Flaschenkopf 7 verschiedene Armaturen auf, im hier gezeigten Ausführungsbeispiel sind dies ein am Gasausgang 10 des Entnahmeventils 8 angeschlossener Druckregler 11, ein sich an dem Druckregler 11 anschließender Entnahmeanschluss 12, eine Druckanzeige 13 und ein mit der Ventilspindel 9 verbundenes Handrad 14. Weitere Armaturen, wie beispielsweise ein Füllanschluss, ein oder mehrere weitere Entnahmeanschlüsse, Stell- oder Reduzierventile u. dergl. können ebenfalls vorgesehen sein, sind jedoch hier aus Gründen der Übersichtlichkeit nicht gezeigt.

Der Flaschenkopf 7 ist mit einer Schutzeinrichtung ausgerüstet, die das Entnahmeventil 8 und die Armaturen 11, 12, 13, 14 gegen Beschädigungen im Falle einer starken mechanischen Beanspruchung, etwa beim Umfallen der Druckgasflasche 1, abschirmen soll. Die Schutzeinrichtung umfasst ein Gehäuse 16, bei dem es sich beispielsweise um eine das Entnahmeventil 8 umschließende Halbschale, Korb- oder Käfigstruktur aus Metall oder Kunststoff handelt. Im hier gezeigten Ausführungsbeispiel handelt es sich beim Gehäuse 16 um einen im Wesentlichen zylinderförmig aufgebauten Hohlkörper aus Kunststoff, der mit einer mit einem Innengewinde ausgerüsteten Bodenplatte 17 auf das Halsringgewinde 5 der Druckgasflasche 1 aufgeschraubt ist. Das Gehäuse 16 ist im hier gezeigten Ausführungsbeispiel zudem mit einem Kragenabschnitt 18 ausgerüstet, mit dem es sich vom Schulterabschnitt 4 der Druckgasflasche 1 abstützt und der auf diese Weise für eine erhöhte Stabilität des Gehäuses 16 im Falle einer starken mechanischen Beanspruchung sorgt. Weiterhin ist das Gehäuse 16 mit einem Tragegriff 19 ausgerüstet, der dem erleichterten Transport der Druckgasflasche 1 dient.

Im Bereich der Armaturen 12, 13, 14 (und ggf. im Bereich hier nicht gezeigter weiterer Armaturen) weist das im Übrigen geschlossene Gehäuse 16 Zugangsöffnungen auf, die die Zugänglichkeit der Armaturen 12, 13, 14 auch bei auf die Druckgasflasche 1 montiertem Gehäuse 16 ermöglichen. Insbesondere weist das Gehäuse 16 im Bereich des Entnahmeanschlusses 12 eine Zugangsöffnung 22 auf. Die Zugangsöffnung 22 schließt sich eng um den Entnahmeanschluss 12 herum an und ist innerhalb einer Vertiefung 23 des Gehäuses 16 angeordnet, die einer Bedienperson den Zugang zum Entnahmeanschluss 12 und dessen Verbindung mit einer (hier nicht gezeigten) Verbrauchseinrichtung ermöglicht. Im hier gezeigten Ausführungsbeispiel ist die Vertiefung 23 von im Wesentlichen rechteckigem Zuschnitt und weist eine Tiefe von beispielsweise zwischen 5 mm und 20 mm auf. Die Zugangsöffnung 22 ist asymmetrisch in der Vertiefung 23 angeordnet und befindet sich innerhalb einer von der kurzen Mittelachse des rechteckigen Vertiefung 23 getrennten Halbfläche der Vertiefung 23.

Die Oberfläche des Entnahmeanschlusses 12 wird durch ein im Folgenden näher beschriebenes Sicherheitselement 25 vor Verschmutzungen aus der Umgebung 12 geschützt.

Das der Fläche und Tiefe der Vertiefung 23 angepasste Sicherheitselement 25 besteht aus einem elastischen, transparenten Material, wie beispielsweise einem Elastomer. Sofern kein Verbraucher oder keine Gasleitung am Entnahmeanschluss 12 angeschlossen ist, also insbesondere während des Transports oder während einer Phase der Nichtbenutzung der Druckgasflasche 1, füllt das Sicherheitselement 25 die Vertiefung 23 vollständig aus und überdeckt auch den Entnahmeanschluss 12. Das Sicherheitselement 25 befindet sich in diesem Fall in seiner Schließposition. An einem in dieser Schließposition vom Entnahmeanschluss 12 beabstandeten Abschnitt des Sicherheitselements 25, beispielsweise im Bereich der den Entnahmeanschluss 12 nicht überdeckenden Halbfläche, ist das Sicherheitselement 25 an einem oder mehreren Fixierelementen 26, 27 fest, beispielsweise formschlüssig oder durch Verkleben oder Verklemmen, mit dem Gehäuse 16 verbunden. In der den Entnahmeanschluss 12 überdeckenden Halbfläche des Sicherheitselements 25 ist eine Griffmulde 28 angeordnet. Im Bereich zwischen den Fixierelementen 26, 27 und dem Entnahmeanschluss 12 weist das Sicherheitselement 25 einen Knickbereich 29 auf, bei der es sich beispielsweise um eine Schwächezone handelt, an der sich das elastische Sicherheitselement 25 umklappen lässt, wie durch den Pfeil 30 angedeutet.

Die Funktionsweise des Sicherheitselements 25 wird im Folgenden beschrieben:
Wie erwähnt, füllt in Schließposition das Sicherheitselement 25 die Vertiefung 23 vollständig aus und überdeckt dabei den Entnahmeanschluss 12, sodass dieser vor dem Anhaften von Verschmutzung oder vor Kontamination geschützt ist.

Zum Entnehmen von Gas wird das Sicherheitselement 25 durch Ziehen an der Griffmulde 28 aufgeklappt. Dabei klappt das Sicherheitselement 25 am Knickbereich 29 derart auf, dass das Entnahmeventil 12 freigegeben und der Anschluss einer Verbrauchseinrichtung ermöglicht wird. Die Befestigung an den Fixierelementen 26, 27 gewährleistet dabei, dass der Sicherheitsabschnitt 25 weiterhin mit dem Gehäuse 16 verbunden bleibt und nicht verrutscht oder abfällt. Nach Beendigung der der Benutzung der Druckgasflasche 1 wird die Verbrauchseinrichtung vom Entnahmeanschluss 12 getrennt. Aufgrund der elastischen Eigenschaften des Sicherheitselements 25, insbesondere der einem Elastomer innewohnenden Rückstellkräfte, gelangt dieses anschließend selbsttätig wieder in die Schließposition, in der der Entnahmeanschluss 12 bedeckt und abgesichert ist.

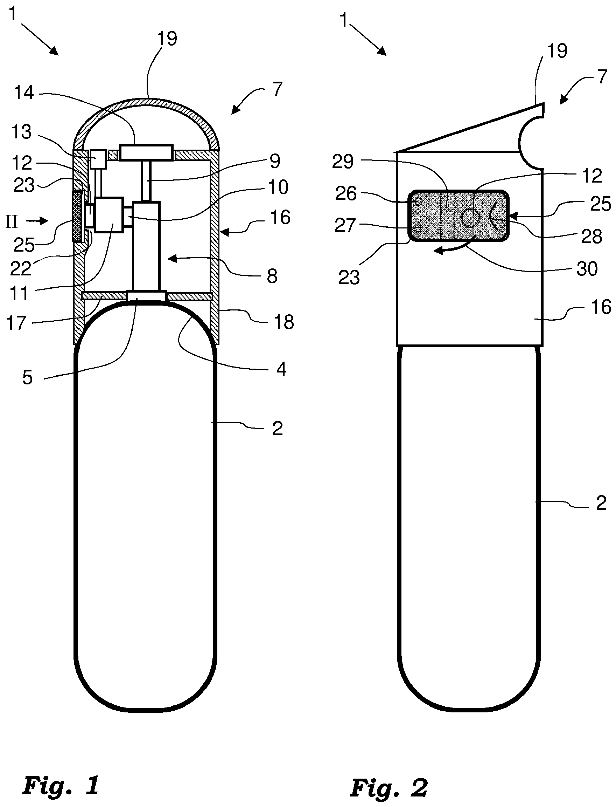

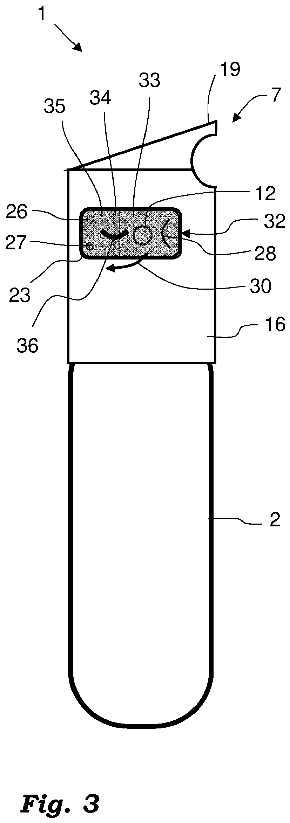

Die in Fig. 3 gezeigte Schutzvorrichtung unterscheidet sich von der in Fig. 1 und 2 gezeigten lediglich durch die Art ihres Sicherheitselements. Im Übrigen gleich wirkende Teile sind mit den gleichen Bezugszeichen wie in Fig. 1 und Fig. 2 bezeichnet.

Das in Fig. 3 gezeigte Sicherheitselement 32 umfasst einen in seiner Schließposition den Entnahmeanschluss 12 überdeckenden Sicherheitsabschnitt 33, der über ein Scharnier oder Gelenk 34, mit einem Befestigungsabschnitt 35 verbunden ist, welcher, wie zuvor beschrieben, an Fixierelementen 26, 27 mit dem Gehäuse 14 fest verbunden ist. Sicherheitsabschnitt 33 und Befestigungsabschnitt 35 können dabei aus einem unflexiblen Material gefertigt sein. Beim Gelenk 34 handelt es sich beispielsweise um ein einstückig mit beiden Abschnitten 33, 35 ausgebildetes Filmscharnier. Zum Verbinden einer Verbrauchseinrichtung wird der Sicherheitsabschnitt 33 gegen die Kraft einer sich zwischen dem Befestigungsabschnitt 35 und dem Sicherheitsabschnitt 33 erstreckenden Rückstellfeder 36 am Gelenk 34 aufgeklappt und so in seine Freigabeposition verschwenkt. Während der Verbindung der Verbrauchseinrichtung mit dem Entnahmeanschluss 12 hält diese den Sicherheitsabschnitt 33 in seiner Freigabeposition. Nach Ablösen der Verbrauchseinrichtung verschwenkt der Sicherheitsabschnitt unter der Wirkung der Rückstellfeder 36 selbsttätig zurück in seine Schließposition.

Im Übrigen sind erfindungsgemäß auch andere Ausgestaltungen anstelle des hier gezeigten Ausführungsbeispiels möglich. Beispielsweise kann eine Mehrzahl von Entnahmeanschlüssen 12 mit einem Sicherheitselement 25 geschützt werden. Sind die beiden Entnahmeanschlüsse dabei beabstandet voneinander, kann das Sicherheitselement in einem Abschnitt zwischen den Entnahmeanschlüssen am Gehäuse befestigt sein, und das Sicherheitselement kann zu beiden Entnahmeanschlüssen hin aufgeklappt werden. Selbstverständlich muss auch das Sicherheitselement im Rahmen der Erfindung nicht zwingend rechteckig ausgebildet sein; es kann vielmehr jede Form und Ausgestaltung aufweisen, die ein zuverlässiges Aufklappen aus einer den Entnahmeanschluss oder die Entnahmeanschlüsse überdeckenden Schließposition in eine das Anschließen einer Verbrauchseinrichtung erlaubenden Freigabeposition ermöglicht und bei der nach dem Entfernen der Verbrauchseinrichtung vom Entnahmeanschluss eine selbsttätige Rückkehr des Sicherheitselements in seine Schließposition erfolgt.

### Bezugszeichenliste

- 1: Druckgasflasche
- 2: Flaschenkorpus
- 3: -
- 4: Schulterabschnitt
- 5: Halsringgewinde
- 6: -
- 7: Flaschenkopf
- 8: Entnahmeventil
- 9: Ventilspindel
- 10: Gasausgang
- 11: Druckregler
- 12: Entnahmeanschluss
- 13: Druckanzeige
- 14: -
- 15: -
- 16: Gehäuse
- 17: Bodenplatte
- 18: Kragenabschnitt
- 19: Tragegriff
- 20: -
- 21: -
- 22: Zugangsöffnung
- 23: Vertiefung
- 24: -
- 25: Sicherheitselement
- 26: Fixierelement
- 27: Fixierelement
- 28: Griffmulde
- 29: Knickbereich
- 30: Pfeil
- 31: -
- 32: Sicherheitselement
- 33: Sicherheitsabschnitt
- 34: Gelenk
- 35: Befestigungsabschnitt
- 36: Rückstellfeder

## Patentansprüche

1. Schutzvorrichtung für Druckgasbehälter, mit einem Gehäuse (16), das mit einem Druckgasbehälter (1) verbindbar ist und einen Hohlraum zum Umschließen eines wenigstens einen Entnahmeanschluss (12) zum Anschließen einer Verbrauchseinrichtung aufweisenden Entnahmeventils (8) umfasst und eine oder mehrere den Zugang zu dem wenigstens einen Entnahmeanschluss (12) ermöglichende Zugangsöffnung/en (22) aufweist,
wobei das Gehäuse (16) im Bereich der Zugangsöffnung (22) des wenigstens einen Entnahmeanschlusses (12) mit einem elastischen Sicherheitselement (25, 32) ausgerüstet ist, das am Gehäuse (16) befestigt und derart ausgebildet ist, dass es aus einer Schließposition, in der der wenigstens eine Entnahmeanschluss (12) vollständig vom Sicherheitselement (25, 32) überdeckt und/oder von diesem umschlossen ist, in eine Freigabeposition aufklappbar ist, in der der wenigstens eine Entnahmeanschluss (12) zum Anschließen einer Verbrauchseinrichtung freigegeben ist, **dadurch gekennzeichnet dass** in der Freigabeposition das Sicherheitselement (25, 32) von der mit dem Entnahmeanschluss (12) verbundenen Verbrauchseinrichtung gehalten wird, und das elastische Sicherheitselement (25, 32) nach Entfernung der Verbrauchseinrichtung vom Entnahmeanschluss (12) selbsttätig in seine Schließposition zurückkehrt, wozu das Sicherheitselement (25, 32) aus einem elastisch verformbaren Material, wie Elastomer, gefertigt ist, und/oder
das Sicherheitselement (25, 32) einen in seiner Schließposition den Entnahmeanschluss (25) überdeckenden oder umschließenden Sicherheitsabschnitt (33) aufweist, der mit einem Rückstellmechanismus (36) wirkverbunden ist.

2. Schutzvorrichtung nach Anspruch 1, **dadurch gekennzeichnet, dass** das Sicherheitselement (25, 32) einen definierten Knickbereich (29) aufweist.

3. Schutzvorrichtung nach einem der vorhergehenden Ansprüche, **dadurch gekennzeichnet, dass** das Sicherheitselement (25, 32) mit einem Griffelement (28) ausgerüstet ist.

4. Schutzvorrichtung nach einem der vorhergehenden Ansprüche, **dadurch gekennzeichnet, dass** das Sicherheitselement (25, 32) aus einem transparenten Material gefertigt ist.

5. Schutzvorrichtung nach einem der vorhergehenden Ansprüche, **dadurch gekennzeichnet, dass** das Gehäuse (16) im Bereich der Zugangsöffnung (22) des Entnahmeanschlusses (12) eine Vertiefung (23) aufweist, in der das Sicherheitselement (25, 32) in seiner Schließposition aufgenommen ist.

6. Schutzvorrichtung nach einem der vorhergehenden Ansprüche, **dadurch gekennzeichnet, dass** die Schutzvorrichtung für Druckgasbehälter (1) mit einem Füllvolumen zwischen 1I und 50I konzipiert ist.

## Claims

1. Protective device for pressurized-gas containers, having a housing (16) which can be connected to a pressurized-gas container (1), comprises a cavity for enclosing an extraction valve (8) having at least one extraction connection (12) for connecting a consumption device, and has one or more access openings (22) allowing access to the at least one extraction connection (12), wherein
in the region of the access opening (22) of the at least one extraction connection (12), the housing (16) is equipped with an elastic safety element (25, 32) which is fastened to the housing (16) and is designed such that it can be swung open from a closed position, in which the at least one extraction connection (12) is completely covered and/or enclosed by the safety element (25, 32), into an opened-up position, in which the at least one extraction connection (12) is opened up for connecting a consumption device, **characterized in that**, in the opened-up position, the safety element (25, 32) is retained by the consumption device connected to the extraction connection (12), and, after the consumption device has been removed from the extraction connection (12), the elastic safety element (25, 32) automatically returns to its closed position, for which the safety element (25, 32) is made from an elastically deformable material, such as an elastomer, and/or
the safety element (25, 32) has a safety portion (33) which, in its closed position, covers or encloses the extraction connection (25) and which is operatively connected to a return mechanism (36).

2. Protective device according to Claim 1, **characterized in that** the safety element (25, 32) has a defined bending region (29).

3. Protective device according to either of the preceding claims, **characterized in that** the safety element (25, 32) is equipped with a grip element (28).

4. Protective device according to one of the preceding claims, **characterized in that** the safety element (25, 32) is made from a transparent material.

5. Protective device according to one of the preceding claims, **characterized in that**, in the region of the access opening (22) of the extraction connection (12), the housing (16) has a depression (23) in which the safety element (25, 32) is received in its closed position.

6. Protective device according to one of the preceding claims, **characterized in that** the protective device is designed for pressurized-gas containers (1) having a capacity of between 1 1 and 50 1.

## Revendications

1. Dispositif de protection pour des réservoirs de gaz sous pression, avec un boîtier (16) qui peut être relié à un réservoir de gaz sous pression (1) et qui comprend une cavité pour entourer une soupape de prélèvement (8) présentant au moins un raccord de prélèvement (12) pour le raccordement d'un appareil de consommation et qui présente une ou plusieurs ouvertures d'accès (22) permettant l'accès à l'au moins un raccord de prélèvement (12),
le boîtier (16) étant équipé, dans la zone de l'ouverture d'accès (22) de l'au moins un raccord de prélèvement (12), d'un élément de sécurité élastique (25, 32) qui est fixé au boîtier (16) et qui est configuré de telle sorte qu'il peut être rabattu d'une position de fermeture dans laquelle l'au moins un raccord de prélèvement (12) est entièrement recouvert par l'élément de sécurité (25, 32) et/ou entouré par celui-ci, dans une position de dégagement dans laquelle l'au moins un raccord de prélèvement (12) est dégagé pour le raccordement d'un appareil de consommation, **caractérisé en ce que**, dans la position de dégagement, l'élément de sécurité (25, 32) est maintenu par l'appareil de consommation relié au raccord de prélèvement (12), et l'élément de sécurité élastique (25, 32) revient automatiquement dans sa position de fermeture après le retrait de l'appareil de consommation du raccord de prélèvement (12), l'élément de sécurité (25, 32) étant pour cela fabriqué dans un matériau élastiquement déformable, tel qu'un élastomère, et/ou
l'élément de sécurité (25, 32) présentant une section de sécurité (33) qui, dans sa position de fermeture, recouvre ou entoure le raccord de prélèvement (25), qui est reliée fonctionnellement à un mécanisme de rappel (36) .

2. Dispositif de protection selon la revendication 1, **caractérisé en ce que** l'élément de sécurité (25, 32) présente une zone de pliage définie (29).

3. Dispositif de protection selon l'une quelconque des revendications précédentes, **caractérisé en ce que** l'élément de sécurité (25, 32) est équipé d'un élément de préhension (28).

4. Dispositif de protection selon l'une quelconque des revendications précédentes, **caractérisé en ce que** l'élément de sécurité (25, 32) est fabriqué dans un matériau transparent.

5. Dispositif de protection selon l'une quelconque des revendications précédentes, **caractérisé en ce que** le boîtier (16) présente, dans la zone de l'ouverture d'accès (22) du raccord de prélèvement (12), un renfoncement (23) dans lequel est reçu l'élément de sécurité (25, 32) dans sa position de fermeture.

6. Dispositif de protection selon l'une quelconque des revendications précédentes, **caractérisé en ce que** le dispositif de protection est conçu pour des réservoirs de gaz sous pression (1) ayant un volume de remplissage compris entre 1 l et 50 1.
